# EUROPEAN PATENT APPLICATION

(11) **EP 4 503 062 A1**
(43) Date of publication of application: **05.02.2025**
(21) Application number: 23780553.6
(22) Date of filing: 28.03.2023
(51) Int. Cl.: H01B 3/44, C08L 23/02, C08L 23/08, C08L 23/12, C08L 23/26, C08L 25/04, C08L 51/06, H01B 9/00

(54) **INSULATING RESIN COMPOSITION FOR ELECTRIC POWER CABLE AND ELECTRIC POWER CABLE**

(30) Priority: 30.03.2022 JP 2022057510
(71) Applicant: FURUKAWA ELECTRIC CO., LTD., Tokyo 100-8322 (JP)
(72) Inventor: MIEDA, Tetsuya, Tokyo 100-8322 (JP); MITSUGI, Shingo, Tokyo 100-8322 (JP)
(74) Representative: Winter, Brandl - Partnerschaft mbB
(86) International application number: PCT/JP2023/012570
(87) International publication number: WO 2023/190544

(57) **Abstract**

This insulating resin composition for electric power cable includes a component (a), a component (b), a component (c), and a component (d), in which the component (a) is polypropylene, the component (b) is an elastomer, the component (c) is at least one type of resin selected from a resin (c1) and a resin (c2), the resin (c1) being a resin in which at least one type of modified monomer selected from unsaturated organic acid and derivative thereof is grafted, and the resin (c2) being at least one type of ethylene-based copolymer selected from an ethylene-acrylate copolymer, ethylene-acrylic acid copolymer and ethylene-vinyl acetate copolymer, and the component (d) is a water tree retardant.

## Description

### TECHNICAL FIELD

The present disclosure relates to an insulating resin composition for electric power cable and an electric power cable.

### BACKGROUND ART

The crosslinked polyethene (XLPE) which has been used in an electric power cable conventionally is being used in the insulator of an electric power cable. However, XLPE could not be recycled during cable disposal, due to lacking thermoplasticity. For this reason, development of an insulation resin made using a polypropylene, which is a non-crosslinked thermoplastic resin, has been progressing.

However, even with a thermoplastic insulating resin, water tree occurs similarly to XLPE. Water tree is an arborescent defect occurring due to foreign substances or bubbles (voids) in the resin. Due to dielectrophoresis of water occurring by flowing electricity in the electric power cable, the water tree grows by the moisture in the resin concentrating on the interface of the foreign substances or voids. Since the water tree causes destruction of the electric power cable, it has been sought to suppress the growth of water tree.

To suppress the growth of such water tree, in the XLPE resin, hydrophilic molecules, e.g., polyethylene glycols, are added to hydrophobic polyethylene. Since moisture uniformly disperses in the XLPE resin by way of the hydrophilic molecules such as polyethylene glycols, the concentration of moisture on the interface of the foreign substances and voids is curbed, and the growth of water tree is suppressed.

In addition, Patent Document 1 discloses a polyolefin composition for electrical insulation containing polyolefin or crosslinked polyolefin and a small amount of high molecular weight polyethylene glycol. In addition, it also discloses technology where a low hydrophilic material such as polypropylene glycol or a hydrophobic material do not prevent the generation of water tree in an insulator.

In this way, a hydrophilic molecule is added in XLPE to suppress the growth of the water tree. However, even if a polypropylene which is a thermoplastic resin, since the addition of a hydrophilic molecule increases the dielectric loss tangent (tanδ) of the resin, the electric power transmission efficiency of the electric power cable declines.

### Citation List

### Patent Document

Patent Document 1: US Patent No. 4305849

### DISCLOSURE OF THE INVENTION

### Problems to be Solved by the Invention

An object of the present disclosure is to provide an insulating resin composition for electric power cable and an electric power cable which are recyclable, and can suppress the growth of water tree and decrease the dielectric loss tangent.

### Means for Solving the Problems

[1] An insulating resin composition for electric power cable includes: a component (a); a component (b); a component (c); and a component (d), in which the component (a) is polypropylene, the component (b) is an elastomer, the component (c) is at least one type of resin selected from a resin (c1) and a resin (c2), the resin (c1) being a resin in which at least one type of modified monomer selected from unsaturated organic acid and derivative thereof is grafted, and the resin (c2) being at least one type of ethylene-based copolymer selected from an ethylene-acrylate copolymer, ethylene-acrylic acid copolymer and ethylene-vinyl acetate copolymer, and the component (d) is a water tree retardant.
[2] In the insulating resin composition for electric power cable as described in [1] above, the resin (c1) is a maleic anhydride graft resin.
[3] In the insulating resin composition for electric power cable as described in [1] or [2] above, the component (d) is at least one compound selected from a polyalkylene glycol and derivative thereof, polyglycerin, glycerin fatty acid ester, and sorbitol ester.
[4] In the insulating resin composition for electric power cable as described in any one of [1] to [3] above, a melt flow rate at 230°C of the insulating resin composition for electric power cable is 10.0 g/10 min or less.
[5] In the insulating resin composition for electric power cable as described in any one of [1] to [4] above, the component (b) is an olefin-based copolymer or a styrene-based copolymer.
[6] In the insulating resin composition for electric power cable as described in any one of [1] to [5] above, the resin (c1) is a resin in which maleic anhydride is bonded to at least one resin selected from polypropylene, polyethylene and a styrene-based copolymer.
[7] An electric power cable includes: a conductor; an internal semiconductor layer disposed on an outer side of the conductor, and encircling the conductor; an insulation layer disposed on an outer side of the internal semiconductor layer, encircling the internal semiconductor layer, and consisting of the insulating resin composition for electric power cable as described in any one of [1] to [6] above; and an external semiconductor layer disposed on an outer side of the insulation layer, and encircling the insulation layer.

### Effects of the Invention

According to the present disclosure, it is possible to provide an insulating resin composition for electric power cable and an electric power cable which are recyclable, and can suppress the growth of water tree and decrease the dielectric loss tangent.

### BRIEF DESCRIPTION OF THE DRAWINGS

FIG. 1 is a cross-sectional view showing an example of an electric power cable applying an insulating resin composition for electric power cable according to an embodiment.
FIG. 2 is a schematic drawing showing a water tree test.

### PREFERRED MODE FOR CARRYING OUT THE INVENTION

Hereinafter, the present invention will be explained in detail based on embodiments.

The present inventors found, as a result of conducting extensive research, that it is possible to suppress an increase in dielectric loss tangent caused by a water tree retardant, by using polypropylene from the viewpoint of recycling the insulating resin composition for electric power cable, and further, by containing a specific component, even if the polypropylene contains the water tree retardant for suppressing the growth of water tree, thereby arriving at completing the present disclosure based on such knowledge.

The insulating resin composition for electric power cable according to an embodiment (hereinafter also referred to simply as insulating resin composition) includes: a component (a); a component (b); a component (c); and a component (d), in which the component (a) is polypropylene, the component (b) is an elastomer, the component (c) is at least one type of resin selected from a resin (c1) and a resin (c2), the resin (c1) being a resin in which at least one type of modified monomer selected from unsaturated organic acid and derivative thereof is grafted, and the resin (c2) being at least one type of ethylene-based copolymer selected from an ethylene-acrylate copolymer, ethylene-acrylic acid copolymer and ethylene-vinyl acetate copolymer, and the component (d) is a water tree retardant.

The insulating resin composition according to the embodiment contains a component (a), a component (b), a component (c) and a component (d) as constituent elements. The insulating resin composition is a non-crosslinked insulator, and can be favorably used in the insulation layer of an electric power cable.

The component (a) contained in the insulating resin composition is polypropylene. The polypropylene is preferably a homo polypropylene, random polypropylene, and block polypropylene. The random polypropylene is a random copolymer of ethylene or α-olefin, and propylene, and the propylene component is preferably 90 wt% or more. The block polypropylene is preferably a copolymer of a homo polypropylene, ethylene and α-olefin. Herein, the α-olefin is preferably a C3 to C8 olefin.

For the content ratio of the component (a) contained in the insulating resin composition, the lower limit value is preferably 10.0 wt% or more, and is more preferably 30.0 wt% or more, and the upper limit value is preferably 90 wt% or less. When the content ratio of the component (a) is within the above range, the recyclability of the insulating resin composition will be favorable, and further, when the content ratio of the component (a) is 30.0 wt% or more, it is possible to improve the heat resistance of the insulating resin composition.

The component (b) contained in the insulating resin composition is an elastomer. The elastomer raises the flexibility of the insulating resin composition containing polypropylene as the component (a). The elastomer which is the component (b) is preferable an olefin-based copolymer or a styrene-based copolymer. When an olefin-based copolymer or a styrene-based copolymer, since compatibility with the polypropylene of the component (a) is good, the interface between the component (a) and the component (b) is closely contact, and fractures originating at the interface are reduced, and since the elastomer component of the component (b) absorbs shock and distortion, the resin strength improves.

The olefin-based copolymer is a copolymer of ethylene or propylene, and α-olefin. The α-olefin is preferably a C3 to C8 α-olefin, and an ethylene-propylene copolymer is more preferable. When the carbon number of the α-olefin is 3 or more and 8 or less, since the compatibility of the component (a) to the polypropylene will be particularly good, the interface between the component (a) and the component (b) is closely contact, and fractures originating at the interface are reduced, and since the elastomer component of the component (b) absorbs shock and distortion, the resin strength improves. These may be blended as the olefin-based thermoplastic elastomer described later. The polymerization catalyst of the olefin-based copolymer is preferably a Ziegler-Natta catalyst, metallocene catalyst or geometrical constraint catalyst, and the olefin-based copolymer may be produced using a gas, solution or slurry polymer method.

As the olefin-based thermoplastic elastomer, a resin obtained by a multi-stage vapor-phase polymerization is preferable. The resin obtained by a multi-stage vapor-phase polymerization improves the impact strength (particularly the impact strength at low temperature, etc.) while maintaining the rigidity and the heat resistance of polypropylene. The resin obtained by a multi-stage vapor-phase polymerization is generally called a heterophasic copolymer, impact copolymer, reactor-made alloy, reactor-made thermoplastic elastomer or reactor TPO (thermoplastic alloy), and the reactor TPO is common. Such resin is a resin composition containing polypropylene and olefin-based copolymer, and specifically, polypropylene, and ethylene-α-olefin copolymer rubber or propylene-α-olefin copolymer rubber.

As the reaction catalyst used upon implementing the multi-stage vapor-phase polymerization, a Ziegler-Natta catalyst and a metallocene catalyst are preferable. In addition, as the monomer used upon implementing the multi-stage vapor-phase polymerization, ethylene, and a monomer of α-olefin such as propylene, butene or octene are preferable.

With the resin obtained by the multi-stage vapor-phase polymerization, the resin components of powder form generated in each stage are blended in the reactor during polymerization. By melt kneading this, compared to a method of blending and melt kneading conventional pellets of polypropylene and elastomer, a resin with a micro-phase separation structure having a finer sea of the propylene polymer component such as a polypropylene and islands of the elastomer component (copolymer rubber component) is obtained. The average particle size of the elastomer component in the insulating resin component is preferably 5 µm or less, and is more preferably 1 µm or less. Herein, the average particle size is determined from the average major diameter of the islands of the elastomer component by photographing the frozen fractured surface of the resin using, for example, a transmission electron microscope (TEM).

As a commercial product of the propylene-based resin obtained by such a multi-stage vapor-phase polymerization, a series of resins called catalloy process resins, e.g., product groups such as Adflex, Hifax, Softell, and Adsyl (the above are registered trademarks) (the above are manufactured by Lyondell Basell), are suitable. In addition, product groups such as TAFMER (registered trademark) PN (manufactured by Mitsui Chemicals), TAFTHREN (registered trademark) (manufactured by Sumitomo Chemical), NEWCON (registered trademark) (manufactured by Nippon Polypro Co., Ltd.), and PRIME TPO (registered trademark) (manufactured by Prime Polymer Co., Ltd.) can also be suitably used.

As the styrene-based copolymer, a styrene-butadiene block copolymer (SBR), a styrene-butadiene-styrene block copolymer (SBS), a styrene-isoprene-styrene block copolymer (SIS), a hydrogenated styrene butadiene rubber (HSBR), a styreneethylene-butylene-styrene block copolymer (SEBS), styreneethylene-propylene-styrene block copolymer (SEPS) and styreneethylene-ethylene-propylene-styrene block copolymer (SEEPS) obtained by adding hydrogen respectively to butadiene polymer block and isoprene polymer block, a styrene-ethylenebutyleneolefin crystal block copolymer (SEBC) and a styrene-butadiene block copolymer (SBR) are preferable. The styrene-based copolymers may be used individually as one type, or may be used by combining two or more types. These styrene-based copolymers have particularly good compatibility to the polypropylene of the component (a); therefore, the interface of the component (a) and the component (b) is closely contact, fractures originating at the interface are reduced, the styrene-based elastomer component which is the component (b) absorbs shock and distortion, and thus the resin strength rises.

For the content ratio of the component (b) contained in the insulating resin component, the lower limit value is preferably 10.0 wt% or more, more preferably 20.0 wt% or more, and even more preferably 30.0 wt% or more, and the upper limit value is preferably 90.0 wt% or less. When the content ratio of the component (b) is within the above-mentioned range, the flexibility of the insulating resin composition is favorable, and further, if the content ratio of the component (b) is 20.0 wt% or more, it is possible to sufficiently improve the flexibility of the insulating resin composition, and further, if the content ratio of the component (b) is 30.0 wt% or more, it is possible to improve the cold resistance of the insulating resin composition.

The component (c) contained in the insulating resin composition is at least one resin selected from the resin (c1) and the resin (c2). The component (c) suppresses a rise in dielectric loss tangent of the insulating resin composition, caused by the water tree retardant which is the component (d).

The resin (c1) is a resin in which at least one type of modified monomer selected from unsaturated organic acid and derivative thereof is grafted (hereinafter also referred to as simply graft resin).

As the functional group introduced to the resin by grafting the modified monomer, it is preferably a functional group having a C=O bond. Thereamong, it is preferably a carbonyl group, carboxyl group, ester group, acid anhydride, amide group or imide group. The water tree retardant that is component (d) is restrained by the hydrogen bond with C=O in the molecule grafted to the resin, whereby the molecular motion by the electric field is suppressed. In this way, since C=O in the molecule grafted to the resin suppresses the motion of the water tree retardant, it is possible to efficiently decrease the dielectric loss tangent of the insulating resin composition. In addition, the graft resin can improve the dispersibility of the water tree retardant, and can suppress the bleed out of the insulating resin composition.

A preferred modified monomer is an unsaturated dicarboxylic acid anhydride. The unsaturated dicarboxylic acid anhydride is preferably maleic anhydride and itaconic acid anhydride, and is more preferably maleic anhydride. These can be used individually or by combining two or more types. As the resin (c1) in which such a modified monomer is grafted, the maleic anhydride is preferably bonded to at least one resin selected from polypropylene, polyethylene and styrene-based copolymer. The polyethylene is preferably a low-density polyethylene produced by a high-pressure process.

When the graft amount of the modified monomer is 0.1 wt% or more and 10.0 wt% or less in the graft resin, it is possible to sufficiently reduce the dielectric loss tangent of the insulating resin composition, and when the graft amount is 0.5 wt% or more and 2.0 wt% or less, since the component (c) uniformly disperses in the insulating resin composition, it is possible to uniformly reduce the dielectric loss tangent in the system.

In the case of the modified monomer being maleic anhydride, the content ratio of the modified monomer contained in the insulating resin composition is preferably 0.01 wt% or more and 0.50 wt% or less. When the maleic anhydride is contained with this range in the insulating resin composition, it is possible to uniformly suppress the dielectric loss tangent in the system. In particular, in the case of containing the maleic anhydride exceeding 0.50 wt%, the graft resin sticks to the metal inner wall of the kneading device or the extruder, and the uniformity of the resin composition decreases. As a result, the growth of the water tree may be promoted.

The resin (c2) is at least one type of ethylene-based copolymer selected from an ethylene-acrylate copolymer, ethylene-acrylic acid copolymer and ethylene-vinyl acetate copolymer.

The ethylene-acrylate copolymer is preferably ethylenemethylacrylate copolymer, ethylene-ethylacrylate copolymer, and ethylene-butylacrylate copolymer.

For the content ratio of the component (c) contained in the insulating resin composition, the lower limit value is preferably 3.0 wt% or more, and more preferably 4.0 wt% or more, and the upper limit value is preferably 25.0 wt% or less, and more preferably 15.0 wt% or less. When the content ratio of the component (c) is within the above range, it is possible to sufficiently decrease the dielectric loss tangent of the insulating resin composition.

For the component (c), the resin (c1) can efficiently decrease the dielectric loss tangent of the insulating resin composition, compared to the resin (c2). For this reason, the insulating resin composition preferably contains the resin (c1). Thereamong, the resin (c1) is preferably a maleic anhydride graft resin.

The component (d) contained in the insulating resin composition is a water tree retardant. The water tree retardant which is the component (d) is a hydrophilic molecule, and can impart hygroscopic property to the insulating resin composition. By imparting the hygroscopic property to the insulating resin composition, since the moisture in the insulating resin composition is uniformly dispersed, the concentration of moisture on the interface of the foreign substances or voids is curbed, and it is possible to suppress the growth of water tree in the insulating resin composition.

The water tree retardant is preferably at least one compound selected from a polyalkylene glycol and derivative thereof, polyglycerin, glycerin fatty acid ester, and sorbitol ester.

The polyalkylene glycol is preferably polyethylene glycol, polypropylene glycol, polyethylene glycolpolypropylene glycol block copolymer, and alkyl ethers or carboxylic acid esters thereof. These water tree retardants have the object of imparting the hygroscopic property to the insulating resin composition by the hydrogen bonding with hydrogen molecules, and the polyalkylene glycol derivative exhibits the effect similar to the polyalkylene glycol. The polyalkylene glycol and derivative thereof, in the case of using by absorbing into resin pellets during dry blending, is preferably a liquid at 60°C. The polyglycerin is a compound in which a plurality of glycerins is polymerized by ether bonds, and may have linear, cyclic or branched structure. In addition, by alkyl etherifying or carboxylic acid esterifying these polyglycerins, the dispersibility in the insulating resin composition of the present disclosure improves. In particular, introducing to the insulating resin composition by fatty acid esterification is preferable in the point of manufacturing stability of the compound. The sorbitol is a polyhydric alcohol derived from glucose, and sorbitol ester is a compound achieved by esterifying at least one hydroxyl group of sorbitol with a fatty acid. By esterification, sorbitol can disperse in the insulating resin composition.

In order to suppress the bleed out of the insulating resin composition, the number average molecular weight of the water tree retardant is preferably 1000 or more, more preferably 3000 or more, and even more preferably 9000 or more. On the other hand, in order to make the dispersiveness of the water tree retardant during melt kneading favorable, the number average molecular weight of the water tree retardant is preferably 30000 or less. In addition, the number average molecular weight of the water tree retardant is preferably 20000 or less for ease of handling.

For the content ratio of the water tree retardant contained in the insulating resin composition, the lower limit value is preferably 0.1 wt% or more, and more preferably 0.2 wt% or more, and the upper limit value is preferably 2.0 wt% or less, and more preferably 1.0 wt% or less. When the content ratio of the water tree retardant is within the above range, it is possible to sufficiently suppress the growth of the water tree in the insulating resin composition. In addition, when the content ratio of the water tree retardant is 1.0 wt% or less, it is possible to further suppress the bleed out of the insulating resin composition.

In addition, since the polypropylene which is the component (a) has a tertiary carbon, molecular chain scission easily occurs due to radicals. For this reason, in order to prevent the molecular chain scission occurred by overheating during extrusion, and in order to prevent the insulating resin composition from reducing in viscosity, the insulating resin composition preferably contains an antioxidant in addition to the above component (a), the component (b), the component (c) and the component (d). As the antioxidant, joint use of a hindered phenol-based antioxidant with the main purpose of radical scavenging, and a phosphorus-based antioxidant or a sulfur-based antioxidant with the main purpose of peroxide decomposition is preferable.

For the content ratio of the antioxidant contained in the insulating resin composition, the lower limit value is preferably 0.01 wt% or more, and more preferably 0.2 wt% or more, and the upper limit value is preferably 1.0 wt% or less, and more preferably 0.6 wt% or less. If the content ratio of the antioxidant is within the above range, it is possible to suppress a viscosity reduction of the insulating resin composition.

In addition, so long as not interfering with recyclability, suppressing the growth of the water tree, and decreasing in dielectric loss tangent of the insulating resin composition, the insulating resin composition may contain various substances in addition to the above components. As the various substances, a stabilizer, a lubricant, an inorganic filler, a surfactant, a flame retardant, an acid scavenger, a voltage stabilizer, etc. can be exemplified.

The insulating resin composition can be obtained by melt kneading after dry blending the component (a), the component (b), the component (c), the component (d), etc. with a Henschel mixer or the like. As the device for the melt kneading, it is possible to use a kneading machine such as a single-screw or twin-screw extruder, Banbury, kneader or the like. In particular, it is preferable to perform resin extrusion by attaching a metal mesh filter having a sieve size of 100 um or less with the object of removing foreign matters to the single-screw or twin-screw extruder which is capable of continuous processing.

The resin temperature during the melt kneading is preferably the polypropylene melting point or more, and more specifically, is preferably 140°C or more. In addition, in the case of applying the insulating resin composition to the insulation layer of the electric power cable, the resin temperature during the melt kneading is preferably 160°C or more, more preferably 180°C or more, and even more preferably 200°C or more in order to raise the adhesion between each resin layer of the electric power cable. In addition, when the resin temperature during the melt kneading is 270°C or less, it is possible to suppress resin dripping during extrusion, and when the resin temperature during the melt kneading is 240°C or less, it is possible to suppress thermal degradation of the resin.

In addition, the dielectric loss tangent of 30 kV/mm at 90°C of the insulating resin composition is preferably 0.50% or less, and more preferably 0.10% or less. When the above-mentioned dielectric loss tangent of the insulating resin composition is within the above range, since the electric power cable applying the insulating resin composition to the insulation layer will have a small dielectric loss tangent, it is possible to improve the electric power transmission efficiency. The above-mentioned dielectric loss tangent of the insulating resin composition is a value when measuring at the condition of 30 kV/mm at 90°C based on JIS C 2138. The dielectric loss tangent has temperature dependence and applied electric field dependence.

In addition, for suppressing the growth of the water tree in the insulating resin composition, the coefficient of moisture absorption of the insulating resin composition is preferably 500 ppm or more, and more preferably 800 ppm or more. By imparting the hygroscopic property to the insulating resin composition, the moisture in the insulating resin composition uniformly disperses, and it is possible to suppress the growth of the water tree in the insulating resin composition. In addition, from the viewpoint of dielectric strength, the coefficient of moisture absorption of the insulating resin composition is preferably 2000 ppm or less.

In addition, for the melt flow rate of the insulating resin composition when measured at the melting temperature of 230°C and the load of 2.16 kgf based on JIS K 7210, from the viewpoint of shape keeping, it is preferably 10.0 g/10 min or less, and more preferably 1.0 g/10 min or less, and from the viewpoint of suppressing the bleed out of the water tree retardant which is the component (d), lower is more preferable. In addition, from the viewpoint of workability, the melt flow rate of the insulating resin composition when measured at the melting temperature of 250°C and the load of 2.16 kgf based on JIS K 7210 is preferably 0.1 g/10 min or more.

The insulating resin composition of the embodiment is an insulator. With the electric power cable made by applying the insulating resin composition to the insulation layer, since it is possible to suppress the water tree growth in the insulation layer and possible to decrease the dielectric loss tangent, even if using such electric power cable at high voltage or ultrahigh voltage, the electric power cable can efficiently transmit electric power. Such an electric power cable is favorably used in an underground cable and an undersea cable. When the electric power cable is an AC power cable, the effects of suppressing the water tree growth and decreasing the dielectric loss tangent are more effectively exhibited.

In addition, the above-mentioned insulating resin composition is not crosslinked, i.e. non-crosslinked. For this reason, the insulating resin composition is recyclable. For example, when abandoning the electric power cable made by applying the insulating resin composition to the insulation layer, it is possible to recycle the insulating resin composition used in the insulation layer. In addition, due to the insulating resin composition containing a polypropylene as the component (a) with higher melting point than the polyethylene, the electric power cable made by applying the insulating resin composition to the insulation layer can flow large current compared to the insulating resin composition using polyethylene, and can suppress the water tree growth and a rise in dielectric loss tangent.

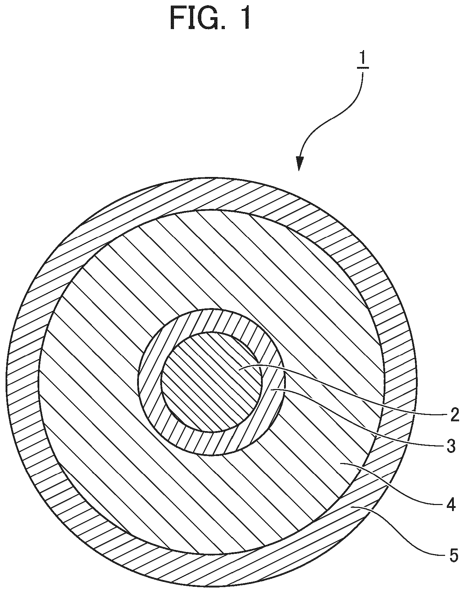

FIG. 1 is a cross-sectional view showing an example of an electric power cable made by applying the insulating resin composition of the embodiment.

As shown in FIG. 1, the electric power cable 1 includes a conductor 2, an internal semiconductor layer 3 disposed on the outer side of the conductor 2, an insulation layer 4 disposed on the outer side of the internal semiconductor layer 3 and consisting of the above-mentioned insulating resin composition, and an external semiconductor layer 5 disposed on the outer side of the insulation layer 4. The internal semiconductor layer 3 encircles the conductor 2. The insulation layer 4 encircles the internal semiconductor layer 3. The external semiconductor layer 5 encircles the insulation layer 4. In this way, with the electric power cable 1, the internal semiconductor layer 3, the insulation layer 4 and the external semiconductor layer 5 are layered in this order on the conductor 2 configured from a metal such as copper or aluminum.

The internal semiconductor layer 3 and the external semiconductor layer 5, for example, are electroconductive resin compositions containing polypropylene, a thermoplastic elastomer resin including an ethylene-α-olefin copolymer or propylene-α-olefin copolymer, or a styrene-based elastomer resin, and an electroconductive carbon black, obtained by a multi-stage vapor phase polymerization method. For dispersion adjustment of the carbon black, ethylene-ethylacrylate resin or ethylene-vinyl acetate resin may be blended into the electroconductive resin composition.

In addition, the electric power cable 1 may further include a metal shielding layer (not shown) disposed on the outer side of the external semiconductor layer 5, and encircling the external semiconductor layer 5. In addition, the electric power cable 1 may further include a sheath (not shown) disposed on the outer side of the metal shielding layer, and encircling the metal shielding layer.

The conductor 2 is continuously supplied to the resin extrusion port, and covered by the internal semiconductor layer 3, the insulation layer 4 (insulating resin composition layer) and the external semiconductor layer 5 herein. These three layers may be extruded and covered simultaneously, or may be covered sequentially. In the case of the conductor during covering being heated by heat transfer from the previously coated resin, since the cooling rate of the resin near the conductor is decreased, it is preferable to adjust the temperature of the conductor to 1°C or more and 100°C or less by cooling, and to supply the conductor to the resin extrusion port. The electric power cable 1 is obtained in this way. Subsequently, the electric power cable 1 is cooled by cooling pipes or a cooling tank, and the metal shielding layer or the sheath (not shown) is formed by a common method as necessary.

The covering of the insulating resin composition is performed by extruding onto the conductor 2 (on the internal semiconductor layer 3) from the resin extrusion port of a resin extruder to which a metal mesh filter having a sieve size of 100 um or less is attached with the object of removing foreign matters. The temperature of the insulating resin composition during extrusion is preferably the melting point or more of the insulating resin composition, and specifically, is preferably 140°C or more. Furthermore, the temperature of the insulating resin composition during extrusion is preferably 160°C or more, more preferably 180°C or more, and even more preferably 200°C or more, due to raising the adhesion between each resin layer. In addition, the temperature of the insulating resin composition during extrusion is preferably 270°C or less in order to prevent resin dripping during extrusion, and is preferably 240°C or less in order to prevent thermal degradation of the resin.

Upon forming the outer packaging such as the metal shielding layer or the sheath on the electric power cable 1 after cooling, the temperature of the insulation layer 4 is preferably 300°C or less, and is more preferably the extrusion temperature or less of the internal semiconductor layer 3, the insulation layer 4 and the external semiconductor layer 5 on the conductor 2 in order to prevent deformation of the insulation layer 4.

The thickness of the insulation layer 4, from the viewpoint of the insulation characteristic, is preferably 2 mm or more, more preferably 5 mm or more, and even more preferably 10 mm or more, and from the viewpoint of the laying workability, is preferably 50 mm or less, and more preferably 40 mm or less.

In addition, for the thickness of the internal semiconductor layer 3 and the thickness of the external semiconductor layer 5, from the viewpoint of the insulation characteristic, both are preferably 0.1 mm or more, and more preferably 0.5 mm or more, and from the viewpoint of electrical conduction characteristic, both are preferably 5.0 mm or less, more preferably 3.0 mm or less, and even more preferably 2.0 mm or less.

According to the embodiments explained above, even when containing the water tree retardant that is the component (d) for suppressing the growth of the water tree, by containing the component (c), it is possible to suppress an increase in dielectric loss tangent caused by the water tree retardant. Furthermore, the insulating resin composition is recyclable due to the insulating resin composition containing polypropylene that is the component (a) being non-crosslinked. Then, by applying the insulating resin composition that can suppress the water tree growth and decrease the dielectric loss tangent to the insulation layer, it is possible to improve the electric power transmission efficiency of the electric power cable, and the insulating resin composition used in the insulation layer upon dismantling the electric power cable can be recycled.

Although embodiments have been explained above, the present invention is not to be limited to the above embodiments, and encompasses every mode included in the spirit of the present disclosure and scope of the claims, and various modifications thereto within the scope of the present disclosure are possible.

### EXAMPLES

Next, examples and comparative examples will be explained; however, the present invention is not to be limited to these examples.

The raw materials used in the examples and the comparative examples are as follows.

- Component (a): polypropylene (B241; random polypropylene manufactured by Prime Polymer, MFR 0.5)
- Component (b-1): elastomer (Septon 8066; SEES manufactured by Kuraray Corp., styrene content 33%, MFR no flowability)
- Component (b-2): elastomer (Q100F; TPO (thermoplastic elastomer consisting of propylene-α-olefin copolymer and polypropylene) manufactured by Sun Allomer Ltd., MFR 0.6)
- Component (b-3): elastomer (TAFMER DF740; butene-ethylene copolymer manufactured by Mitsui Chemicals, Inc.)
- Component (b-4): elastomer (TAFMER P-0280; ethylene-propylene copolymer manufactured by Mitsui Chemicals, Inc.)
- Component (c1-1): maleic anhydride graft resin (resin grafting 1.00 wt% maleic anhydride to CE1559, MFR 1.4 (190°C))
- Component (c1-2): maleic anhydride graft resin (ADMER QE800: maleic anhydride 0.4 wt% graft PP resin manufactured by Mitsui Chemicals, Inc., MFR 9.1)
- Component (c1-3): maleic anhydride graft resin (Tuftec M1913: maleic anhydride 0.9 wt% graft SEBS resin manufactured by Asah Kasei Corp., MFR 5)
- Component (c2): ethylene-ethyl acrylate copolymer (DPDJ-6182: ethylene ethyl acrylate copolymer manufactured by ENEOS NUC Corp., MFR 1.5)
- Component (d-1): water tree retardant (PEG-20000; polyethylene glycol manufactured by Adeka Corp., number average molecular weight 20000)
- Component (d-2): water tree retardant (polypropylene glycol 4000; polypropylene glycol manufactured by Adeka Corp., number average molecular weight 3000)
- Component (d-3): water tree retardant (PGL10PSW; polyglycerin manufactured by Daicel Corp., average degree of polymerization 10)
- Antioxidant 1: (Irganox 1010; hindered phenol-based antioxidant manufactured by BASF)
- Antioxidant 2: (DSTDP (distearyl thiodipropionate); sulfur-based antioxidant manufactured by Fujifilm Wako Pure Chemicals Corp.)

### (Examples 1 to 11 and Comparative Examples 1 to 3)

After dry blending each raw material using a Henschel mixer, it was extruded by a single-screw extruder (L/D = 24, 200°C) attaching a plain weave mesh with the sieve size of 0.091 mm to obtain pellet-shaped insulating resin composition having the composition shown in Table 1 (hereinafter also referred to as resin pellet).

### (Measurement and Evaluation)

The following measurement and evaluation were performed on the insulating resin compositions obtained in the above examples and the comparative examples. The results are shown in Table 1.

### (1) Coefficient of Moisture Absorption

Using the resin pellets, test pieces made by dividing a molded body molded so as to make a sample of 100 mm length, 150 mm width and 1 mm height into six were kept in a thermohygrostat bath at 70°C and 90% relative humidity for 4 hours, then extracted, and the water content was measured by the Karl Fischer method of JIS K7251 B (moisture vaporization method) to obtain the coefficient of moisture absorption.

### (2) Melt Flow Rate (MFR)

Using the resin pellets, the melt flow rate was measured based on JIS K7210 unless otherwise stated, according to an extruded resin amount (g) per 10 minutes, under the conditions of 230°C melting temperature and 2.16 kgf load.

### (3) Water tree

First, a small electric power cable was produced. First, by extruding the insulating resin composition made using the resin pellets by a single-screw extruder with a plain weave mesh of 0.091 mm sieve size (L/D = 24, 200°C, full flight screw), with a semiconductive material resin extruded by another single-screw extruder with a plain weave mesh of 0.091 mm sieve size (L/D = 24, 200°C, full flight screw), coating was performed on the copper conductor with a three-layer head (200°C). The coated cable passed through a pressurized cooling pipe, and was then sent to a water bath to cool. In this way, a small electric power cable including the copper conductor with an external form of approximately 2 mm, the internal semiconductor layer with a thickness of approximately 0.5 mm, the insulation layer with a thickness of approximately 2 mm, and the external semiconductor layer with a thickness of approximately 0.5 mm was obtained.

As the semiconductive material resin, a pelletized resin was used that was made by extruding in a single-screw extruder (L/D = 24, 200°C), after dry blending 30 parts of EVA450 (ethylene-vinyl acetate copolymer resin manufactured by Dow-Mitsui Polychemicals), 70 parts of Elastomer Q200F (TPO manufactured by Sun Allomer Ltd., MFR 0.8), 30 parts of Denka Black (carbon black manufactured by Denka Co., Ltd.), and 0.5 parts of antioxidant (Nocrac 300 manufactured by Ouchi Shinko Chemical Industrial Co., Ltd., hindered phenol-based antioxidant) in a Henschel mixer.

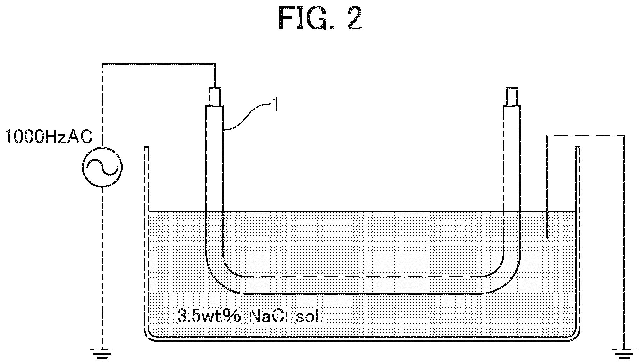

Next, the small electric power cable 1 was immersed in a 3.5 wt% NaCl aqueous solution as shown in FIG. 2, 1000 Hz AC voltage at 4 kV was applied for 200 hours between the conductor and the NaCl aqueous solution to perform the water tree test. Ten samples obtained by slicing the tested electric power cable into 1 mm thickness round slices along the axial direction were observed by optical microscope, and the length of the water tree was measured. Samples having water tree with a length of less than 150 um were given o, and samples having water tree with a length of 150 um or more were given ×.

### (4) Dielectric Loss Tangent

On the sample molded into a film shape of 0.3 mm thickness using the resin pellets, the dielectric loss tangent was measured under the conditions of 30 kV/mm at 90°C based on JIS C2138.

**[Table 1]**

| | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|---|
| Component (a) | Polypropylene | 60.0 | 65.0 | 45.0 | 49.0 | 47.0 | 47.0 | 10.0 | 63.0 | 63.0 | 55.0 | 50.0 | 49.5 | 47.0 | 50.0 |
| Component (b) | Component (b-1) | 25.0 | 25.0 | 39.0 | 49.0 | 47.0 | 47.0 | - | - | - | 30.0 | 40.0 | 49.5 | 47.0 | 49.5 |
| | Component (b-2) | - | - | - | - | - | - | 85.0 | - | - | - | - | - | - | - |
| | Component (b-3) | - | - | - | - | - | - | - | 27.0 | - | - | - | - | - | - |
| | Component (b-4) | - | - | - | - | - | - | - | - | 27.0 | - | - | - | - | - |
| Component (c) | Resin (c1-1) | - | 9.0 | - | 1.4 | - | - | 4.0 | - | - | - | - | - | - | - |
| | Resin (c1-2) | - | - | 15.0 | - | 4.0 | 5.0 | - | 9.0 | 9.0 | - | 6.0 | - | 5.5 | - |
| | Resin (c1-3) | 9.0 | - | - | - | - | - | - | - | - | - | - | - | - | - |
| | Resin (c2) | - | - | - | - | - | - | - | - | - | 14.0 | 3.0 | - | - | - |
| Component (d) | Component (d-1) | - | 0.5 | 0.5 | 0.1 | - | - | 0.5 | 0.5 | 0.5 | 0.5 | 0.5 | 0.5 | - | - |
| | Component (d-2) | - | - | - | - | 1.5 | - | - | - | - | - | - | - | - | - |
| | Component (d-3) | 5.5 | - | - | - | - | 0.5 | - | - | - | - | - | - | - | - |
| Antioxidant 1 | | 0.3 | 0.3 | 0.3 | 0.3 | 0.3 | 0.3 | 0.3 | 0.3 | 0.3 | 0.3 | 0.3 | 0.3 | 0.3 | 0.3 |
| Antioxidant 2 | | 0.2 | 0.2 | 0.2 | 0.2 | 0.2 | 0.2 | 0.2 | 0.2 | 0.2 | 0.2 | 0.2 | 0.2 | 0.2 | 0.2 |
| Coefficient of moisture absorption (ppm) | | 2000 | 1000 | 1000 | 500 | 1500 | 600 | 1000 | 1100 | 1050 | 1200 | 1000 | 1000 | 300 | 300 |
| Melt Flow Rate (g/ 10 min) | | 10.0 | 1.0 | 5.0 | 0.1 | 3.0 | 3.0 | 1.0 | 4.0 | 3.5 | 1.0 | 4.0 | 5.0 | 0.1 | 0.1 |
| Water tree | | ○ | ○ | ○ | ○ | ○ | ○ | ○ | ○ | ○ | ○ | ○ | ○ | × | × |
| Dielectric loss tangent (%) | | 0.50 | 0.05 | 0.05 | 0.05 | 0.10 | 0.07 | 0.04 | 0.05 | 0.05 | 0.05 | 0.05 | 1.00 | 0.05 | 0.05 |

As shown in Table 1, Examples 1 to 11 are recyclable, and could achieve a suppression of the water tree growth and decrease in dielectric loss tangent, due to the insulating resin composition containing the component (a) which is the polypropylene, the component (b), the component (c) and the component (d). On the other hand, Comparative Examples 1 to 3 could not achieve a suppression of the water tree growth and decrease in dielectric loss tangent due to the insulating resin composition not containing at least one component of the component (a) to the component (d).

### EXPLANATION OF REFERENCE NUMERALS

- 1: electric power cable
- 2: conductor
- 3: internal semiconductor layer
- 4: insulation layer
- 5: external semiconductor layer

## Claims

1. An insulating resin composition for electric power cable comprising: a component (a); a component (b); a component (c); and a component (d), wherein
the component (a) is polypropylene,
the component (b) is an elastomer,
the component (c) is at least one type of resin selected from a resin (c1) and a resin (c2), the resin (c1) being a resin in which at least one type of modified monomer selected from unsaturated organic acid and derivative thereof is grafted, and the resin (c2) being at least one type of ethylene-based copolymer selected from an ethylene-acrylate copolymer, ethylene-acrylic acid copolymer and ethylene-vinyl acetate copolymer, and
the component (d) is a water tree retardant.

2. The insulating resin composition for electric power cable according to claim 1, wherein the resin (c1) is a maleic anhydride graft resin.

3. The insulating resin composition for electric power cable according to claim 1 or 2, wherein the component (d) is at least one compound selected from a polyalkylene glycol and derivative thereof, polyglycerin, glycerin fatty acid ester, and sorbitol ester.

4. The insulating resin composition for electric power cable according to any one of claims 1 to 3, wherein a melt flow rate at 230°C of the insulating resin composition for electric power cable is 10.0 g/10 min or less.

5. The insulating resin composition for electric power cable according to any one of claims 1 to 4, wherein the component (b) is an olefin-based copolymer or a styrene-based copolymer.

6. The insulating resin composition for electric power cable according to any one of claims 1 to 5, wherein the resin (c1) is a resin in which maleic anhydride is bonded to at least one resin selected from polypropylene, polyethylene and a styrene-based copolymer.

7. An electric power cable comprising:
a conductor;
an internal semiconductor layer disposed on an outer side of the conductor, and encircling the conductor;
an insulation layer disposed on an outer side of the internal semiconductor layer, encircling the internal semiconductor layer, and consisting of the insulating resin composition for electric power cable according to any one of claims 1 to 6; and
an external semiconductor layer disposed on an outer side of the insulation layer, and encircling the insulation layer.
